(19) Europäisches Patentamt
European Patent Office
Office européen des brevets

(11) Publication number : 0 257 663 B1

(12) # EUROPEAN PATENT SPECIFICATION

(45) Date of publication of patent specification : 15.01.92 Bulletin 92/03

(51) Int. Cl.$^5$ : **C08G 67/02,** B01J 31/00, C07F 9/02

(21) Application number : **87200826.3**

(22) Date of filing : **05.05.87**

(54) **Catalyst compositions, olefin/co copolymerization process and bisphosphine compounds.**

(30) Priority : **26.08.86 NL 8602164**
**26.08.86 NL 8602163**

(43) Date of publication of application : **02.03.88 Bulletin 88/09**

(45) Publication of the grant of the patent : **15.01.92 Bulletin 92/03**

(84) Designated Contracting States : **AT BE CH DE ES FR GB GR IT LI LU NL SE**

(56) References cited :
**EP-A- 0 235 865**
**EP-A- 0 239 145**
**EP-A- 0 251 373**
**EP-A- 0 254 343**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Van Broekhoven, Johannes A.M.**
**Badhuisweg 3**
**NL-1031 CM Amsterdam (NL)**
Inventor : **Wife, Richard Lewin**
**Badhuisweg 3**
**NL-1031 CM Amsterdam (NL)**

(74) Representative : **Tuijn, Jan Warnaar et al**
**Shell Internationale Research Maatschappij B.V., Patents, Licensing & Trade Marks Division, P.O. Box 302**
**NL-2501 CH The Hague (NL)**

EP 0 257 663 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to novel compositions suitable for use as catalysts in the preparation of polymers of carbon monoxide with one or more olefinically unsaturated organic compounds.

It is known to prepare high molecular weight linear polymers of carbon monoxide with one or more olefinically unsaturated compounds (for the sake of brevity referred to as A), in which the monomer units occur in alternating order and which polymers therefore consist of units of the general formula -(CO)-A′-, wherein A′ represents a monomer unit originating in a monomer A used, by using catalyst compositions based upon:

a) a palladium compound,

b) an anion of an acid with a pKa of less than 2, with the proviso that the acid is not a hydrohalogenic acid, and

c) a bisphosphine of the general formula $Z^1Z^2P$-R-$PZ^3Z^4$, wherein $Z^1$-$Z^4$ represent similar or dissimilar hydrocarbyl groups and R represents a bivalent organic bridging group containing at least two carbon atoms in the bridge.

In the above-mentioned polymer preparation both the reaction rates and the molecular weights of the polymers obtained play an important role. On the one hand it is desirable in the preparation of the polymers to aim at the highest possible reaction rate, whilst on the other hand the polymers are more valuable with a view to their uses according as their molecular weights are higher. Both reaction rate and molecular weight can be influenced by the temperature used during polymerization. Unfortunately, the effects the temperature has on reaction rate and molecular weight are opposed to one another, in that at otherwise similar reaction conditions, an increase of the reaction temperature will lead to a rise in reaction rate but a drop in the molecular weights of the polymers obtained. This means in practice that with a view to the uses of these polymers, the reaction temperature will be chosen such as to afford polymers having sufficiently high molecular weights for the relevant uses, and that the corresponding reaction rates will have to be accepted.

Research made by the Applicant into the aforementioned catalyst compositions has recently revealed that their performance can be enhanced by the incorporation as the component c) of a bisphosphine of the general formula $Z^5Z^6P$-R-$PZ^7Z^8$, wherein $Z^5$-$Z^8$ are similar or dissimilar hydrocarbyl groups which may or may not be substituted with polar groups, with the proviso that at least one of the groups $Z^5$-$Z^8$ represents a polarly substitued aryl group containing a polar substituent in a position para to phosphorus, and wherein R has the meaning mentioned hereinbefore. Comparison of the performances of the original catalyst compositions containing a bisphosphine of the general formula $Z_5Z_6P$-R-$PZ_7Z_8$ and of the modified catalyst compositions containing a bisphosphine of the general formula $Z_5Z_6P$-R-$PZ_7Z_8$ shows that at similar reaction rates for both compositions, the use of the modified compositions results in polymers with higher molecular weights, and, conversely, that when the two compositions are used to prepare polymers of similar molecular weights, the modified compositions show higher reaction rates.

Further research into the above-mentioned catalyst compositions has now surprisingly shown that where the relation between reaction rates and molecular weights of the polymers is concerned, their performance can be further improved, by incorporation as the component c) of a bisphosphine of the general formula $R_1R_2P$-R-$PR_3R_4$, wherein $R_1$-$R_4$ represents similar or dissimilar hydrocarbyl groups with the proviso that at least one of the groups $R_1$-$R_4$ represents a polarly substituted aryl group containing at least one polar substituent in a position ortho to phosphorus, and wherein R has the abovementioned meaning. This find offers the prospect of preparing polymers having very high molecular weights, at a high reaction rate. This is of special interest for the preparation of terpolymers of carbon monoxide with ethene and another olefinically unsaturated organic compound, since thus far it has been extremely difficult to prepare these products with a very high molecular weight at an acceptable reaction rate. As stated hereinbefore, the molecular weights of the polymers can be increased by executing the polymerization at lower temperatures. According as lower temperatures are used, the reaction rates will also become lower. Since there will be a point at which the reaction rate becomes inacceptably low, the molecular weights that can be achieved in this way are bound to certain maxima. The investigation has shown that when the polymerization is carried out by using a catalyst composition containing a bisphosphine of the general formula $R_1R_2P$-R-$PR_3R_4$, terpolymers can be prepared at acceptable reaction rates to have molecular weights which are considerably higher than the maximum values mentioned hereinbefore.

It has further been found that, moreover, the use of a catalyst composition containing a bisphosphine of the general formula $R_1R_2P$-R-$PR_3R_4$ has a very favourable influence on the morphology of these polymers. Instead of the small fluffy particles that were obtained using catalyst compositions containing a bisphosphine of the general formula $Z_1Z_2P$-R-$PZ_3Z_4$ or $Z_5Z_6P$-R-$PZ_7Z_8$, the catalyst compositions containing a bisphosphine of the general formula $R_1R_2P$-R-$PR_3R_4$ afford polymers in the form of solid globular particles which in addition have much larger sizes. In comparison with suspensions of the fluffy particles - for instance in methanol -, suspensions of the globular particles exhibit much higher sedimentation rates. On account of their favourable morphology, the polymers

prepared by using a catalyst composition containing a bisphosphine of the general formula $R_1R_2P$-R-$PR_3R_4$ are much easier to handle, for instance during washing procedures, removal of catalyst remnants, transport, storage and working-up.

Finally, it has been found that the activity of the catalyst compositions based upon the components a) and b) and a bisphosphine of the general formula $R_1R_2P$-R-$PR_3R_4$ as the component c) can be much enhanced by incorporating in these compositions a quinone as a component d).

Catalyst compositions based upon the components a) and b) and a bisphosphine of the general formula $R_1R_2P$-R-$PR_3R_4$ as the component c) are novel compositions.

The present patent application therefore relates to catalyst compositions based upon

a) a palladium compound,

b) an anion of an acid with a pKa of less than 2, with the proviso that the acid is not a hydrohalogenic acid,

c) a bisphosphine of the general formula $R_1R_2P$-R-$PR_3R_4$, wherein $R_1$-$R_4$ are similar or dissimilar hydrocarbyl groups with the proviso that at least of the groups $R_1$-$R_4$ represents a polarly substituted aryl group containing at least one polar substituent in a position ortho to phosphorus, and wherein R represents a bivalent organic bridging group containing at least two carbon atoms in the bridge, and

d) optionally, a quinone.

The patent application further relates to the use of these catalyst compositions in the preparation of polymers of carbon monoxide with one or more olefinically unsaturated organic compounds, as well as to polymers thus prepared and to shaped objects consisting at least partly of these polymers.

The palladium compound used as component a) is preferably a palladium salt of a carboxylic acid and in particular palladium acetate. Examples of suitable acids with a pKa of less than 2 (determined in aqueous solution at 18 °C) whose anions should be present in the catalyst compositions as the component b) are sulphuric acid, sulphonic acids, such as p-toluenesulphonic acid, and carboxylic acids, such as trifluoro acetic acid. Preference is given to p-toluenesulphonic acid and trifuoro acetic acid. Component b) is preferably present in the catalyst compositions in a quantity of from 0.5 to 200, and in particular of from 1.0 to 100, equivalents per gram atom of palladium. Component b) may be incorporated in the catalyst compositions either in the form of an acid or in the form of a salt. Eligible salts include non-noble transition metal salts. When component b) is used as a salt of a non-noble transition metal, a copper salt is preferred. Optionally, the components a) and b) may be combined in a single compound. An example of such a compound is the complex $Pd(CH_3CN)_2(O_3S\text{-}C_6H_4\text{-}CH_3)_2$, which can be prepared by reaction in acetonitrile of either palladium chloride with silver para-tosylate, or of palladium acetate with para-toluenesulphonic acid.

The groups $R_1$-$R_4$ present in the bisphophines used as component c) are preferably aryl groups and in particular phenyl groups, provided that at least one of these contains at least one polar substituent in a position ortho to phosphorus. Eligible polar substituent are halogens and groups of the general formulae $R_5$-O-, $R_5$-S-, $R_5$-CO-, $R_5$-CO-O, $R_5$-CO-NH-, $R_5$-CO-$NR_6$-, $R_5R_6N$-, $R_5R_5N$-CO-, $R_5$-O-CO-NH- and $R_5$-O-CO-$NR_6$-, wherein $R_5$ and $R_5$ represent similar or dissimilar hydrocarbyl groups. Preference is given to the polar groups following, $R_5$-O-, $R_5$-S-, $R_5$-CO-O-, $R_5R_6N$-and $R_5$-CO-$NR_6$, wherein $R_5$ and $R_5$ have the afore-mentioned meanings. Particular preference is given to bisphosphines in which at least one of the groups $R_1$-$R_4$ contains an alkoxy group and more in particular a methoxy group as a polar substituent ortho to phosphorus. Furthermore, preference is given to bisphosphines in which each of the groups $R_1$-$R_4$ is an aryl group containing a polar substituent in a position ortho to phosphorus. Finally, bisphosphines are preferred in which the groups $R_1$-$R_4$ are the same.

In the bisphosphines occurring in the catalyst compositions according to the invention at least one of the groups $R_1$-$R_4$ should be a polarly substituted aryl group containing at least one polar substituent ortho to phosphorus. In addition, the polarly substituted aryl group may also contain one or more polar or non-polar substituents. If, in addition to the polar substituent which is present in a position ortho to phosphorus, the polarly substituted aryl group contains further polar substituents, these may be similar to the polar substituent in ortho position to phosphorus, or differ from it. The bivalent organic bridging group R preferably contains three carbon atoms in the bridge.

Bisphosphines that can very suitably be used in the catalyst compositions according to the invention are 1,3-bis[di(2-methoxy-phenyl)phosphino]propane, 1,3-bis[di (2,4-methoxy-phenyl)phosphino]propane, 1,3-bis[di (2,6-dimethoxy-phenyl)phosphino]propane and 1,3-bis[di (2, 4,6-trimethoxy-phenyl)-phosphino]propane.

The bisphosphines are preferably used in the catalyst compositions in a quantity of 0.1-2 and in particular of 0.75-1.5 mol per mol of palladium compound.

Bisphosphines which have the general formula $R_1R_2P$-R-$PR_3R_4$, wherein $R_1$-$R_4$ are similar or dissimilar hydrocarbyl groups with the proviso that at least one of $R_1$-$R_4$ represents a polarly substituted aryl group which includes at least one polar substituent in a ortho-position to phosphorus and wherein R represents a bivalent organic bridging group containing three carbon atoms in the bridge, are novel compounds.

In order to improve the activity of the present catalyst compositions it is preferred that a quinone be included therein as a component d). Besides benzoquinones which may or may not be substituted, other quinones, such as unsubstituted or substituted naphthaquinones and anthraquinones, are also eligible for use. Benzoquinones are preferred, especially 1,4-benzoquinone. The quantity of quinone used preferably amounts to 1-10000, and in particular 10-5000, mol per gram atom of palladium.

The polymerization by using the catalyst compositions according to the invention is preferably carried out in a liquid diluent. Very suitable liquid diluents are lower alcohols, such as methanol and ethanol. The polymerization may also be performed in the gaseous phase, if desired.

Eligible olefinically unsaturated organic compounds that can be polymerized with carbon monoxide with the aid of the catalyst compositions according to the invention are both compounds consisting exclusively of carbon and hydrogen and compounds which, in addition to carbon and hydrogen, contain one or more hetero-atoms. The catalyst compositions according to the invention are preferably used for preparing polymers of carbon monoxide with one or more olefinically unsaturated hydrocarbons. Examples of suitable hydrocarbon monomers are ethene and other α-olefins, such as propene, butene-1, hexene-1 and octene-1 as well as styrene and alkyl-substitutes styrenes, such as p-methyl styrene and p-ethyl styrene. The catalyst compositions according to the invention are especially suitable for use in the preparation of copolymers of carbon monoxide and ethene and in the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain $10^{-7}$-$10^{-3}$, and in particular $10^{-6}$-$10^{-4}$, gram atom of palladium.

The preparation of the polymers is preferably carried out at a temperature of 20-200 °C and a pressure of 1-200 bar and in particular at a temperature of 30-150 °C and a pressure of 20-100 bar. In the mixture to be polymerized, the molar ratio of the olefinically unsaturated organic compounds relative to carbon monoxide is preferably 10:1-1:5 and in particular 5:1-1:2. The carbon monoxide used in the polymer preparation of the invention need not be pure. It may contain such contaminants as hydrogen, carbon dioxide and nitrogen.

According as the polymers prepared according to the invention have higher molecular weights, their intrinsic viscosities too will as a rule be higher. In order to determine the intrinsic viscosity of a polymer prepared according to the invention, four solutions are prepared by dissolving the polymer in m-cresol at 100°C, at four different concentrations. Then the viscosity at 100°C of each of these solutions relative to that of m-cresol at 100°C is determined in a viscometer. When $T_o$ represents the efflux time of m-cresol and $T_p$ the efflux time of the polymer solution, the relative viscosity ($\eta_{rel}$) is determined by $\eta_{rel} = \frac{T_o}{T_p}$. The inherent viscosity ($\eta_{inh}$) can be calculated from $\eta_{rel}$, according to the formula: $\eta_{inh} = \frac{\ln \eta_{rel}}{c}$, wherein c represents the polymer concentration as grams per 100 ml of solution. Plotting of the $\eta_{inh}$ found for each of the four polymer solutions against the corresponding concentration (c) and subsequent extrapolation to c=0 leads to the intrinsic viscosity [η] as dl/g, which will hereinafter be referred to not as 'intrinsic viscosity', but by the designation recommanded by the International Union of Pure and Applied Chemistry of 'Limiting Viscosity Number' (LVN).

The invention is now illustrated with the aid of the following examples.

## Example 1

A carbon monoxide/ethene copolymer was prepared as follows. 250 ml of methanol was introduced into a mechanically stirred autoclave of 300 ml capacity. Any air present in the autoclave was expelled therefrom by pressurizing the autoclave with carbon monoxide until a pressure of 50 bar was reached and then releasing the pressure and repeating this procedure twice over. After the contents of the autoclave had been brought to a temperature of 65°C, a 1:1 carbon monoxide/ethene mixture was introduced into the autoclave until a pressure of 55 bar was reached. A catalyst solution was then introduced into the autoclave, consisting of:

6 ml of methanol,
0.01 mmol of palladium acetate,
0.02 mmol of p-toluenesulphonic acid, and
0.012 mmol of 1,3-bis(diphenyl-phosphino)propane.

The pressure was maintained at 55 bar by introducing under pressure a 1:1 carbon monoxide/ethene mixture. After 3 hours the polymerization was stopped by cooling the reaction mixture down to room temperature and releasing the pressure. The copolymer was filtered off, washed with methanol and dried at 70°C. 6.0 g of a copolymer having an LVN of 1.0 dl/g was obtained. Thus, the reaction rate was 2.0 kg copolymer/g palladium/hour.

## Example 2

A carbon monoxide/ethene copolymer was prepared substantially in the same way as the Copolymer of

Example 1, except for the following differences:

a) the reaction temperature was 85 °C, instead of 65°C, and

b) the reaction time was 2.5 hours instead of 3 hours.

15.25 g of a copolymer having an LVN of 0.6 dl/g was obtained. Thus, the polymerization rate was 6.1 kg copolymer/g palladium/hour.

Example 3

A carbon monoxide/ethene copolymer was prepared substantially in the same way as the Copolymer of Example 1, except for the following differences:

a) the reaction temperature was 85 °C instead of 65 °C, and

b) the catalyst solution contained 1,3-bis[di(4-methoxy-phenyl)-phophino]propane instead of 1,3-bis(diphenyl-phosphino)-propane.

9.6 g of a copolymer with an LVN of 0.9 dl/g was obtained. Thus, the polymerization rate was 3.2 kg copolymer/g palladium/hour.

Example 4

A carbon monoxide/ethene copolymer was prepared substantially in the same way as the copolymer of Example 1, the difference being:

a) the reaction temperature was 100 °C instead of 65 °C, and

b) the catalyst solution contained 1,3-bis[di(4-methoxy-phenyl)-phosphino]propane instead of 1,3-bis(diphenyl-phosphino)-propane.

11.7 g of a copolymer with an LVN of 0.4 dl/g was obtained. Thus, the polymerization rate was 3.9 kg copolymer/g palladium/hour.

Example 5

A carbon monoxide/ethene copolymer was prepared substantially in the same way as the copolymer of Example 1, the differences being

a) the reaction temperature was 71 °C instead of 65 °C, and

b) the catalyst solution contained 1,3-bis[di(2-methoxy-phenyl)-phosphino]propane instead of 1,3-bis(diphenyl-phosphino)-propane, and

c) the reaction time was 2,5 hours instead of 3 hours.

3.25 g of a copolymer with an LVN of 4.0 dl/g was obtained.

Thus, the polymerization rate was 1.3 kg copolymer/g palladium/hour.

Example 6

A carbon monoxide/ethene copolymer was prepared substantially in the same way as the copolymer of Example 1, the differences being:

a) the reaction temperature was 85 °C instead of 65 °C, and

b) the catalyst solution contained 1,3-bis[di(2-methoxy-phenyl)-phosphino]propane instead of 1,3-bis(diphenyl-phosphino)-propane.

6.0 g of a copolymer with an LVN of 2.9 dl/g was obtained. Thus, the polymerization rate was 2.0 kg copolymer/g palladium/hour.

Example 7

A carbon monoxide/ethene copolymer was prepared substantially in the same way as the copolymer of Example 1, the differences being:

a) the reaction temperature was 97 °C instead of 65 °C, and

b) the catalyst solution contained 1,3-bis[di(2-methoxy-phenyl)-phosphino]propane instead of 1,3-bis(diphenyl-phosphino)-propane.

13.5 g of a copolymer with an LVN of 1.0 dl/g was obtained. Thus, the polymerization rate was 4.5 kg copolymer/g palladium/hour.

Example 8

A carbon monoxide/ethene copolymer was prepared substantially in the same way as the copolymer of Example 1, the differences being:

a) the reaction temperature was 97 °C instead of 65 °C,

b) the catalyst solution contained 1,3-bis[di(2-methoxy-phenyl)-phosphino]propane instead of 1,3-bis(diphenyl-phosphino)-propane, and

c) in addition, the catalyst solution contained 2 mmol of 1,4-benzoquinone.

36.6 g of a copolymer with an LVN of 1.0 dl/g was obtained. Thus, the polymerization rate was 12.2 kg copolymer/g palladium/hour.

Example 9

A carbon monoxide/ethene copolymer was prepared substantially in the same way as the copolymer of Example 1, the differences being:

a) the autoclave contained 150 ml instead of 250 ml methanol,

b) the reaction temperature was 95 °C instead of 65 °C,

c) the reaction pressure was 50 bar instead of 55 bar,

d) a catalyst solution was employed which comprised 6 ml methanol, 0.02 mmol palladium acetate, 0.4 mmol trifluoroacetic acid, 0.024 mmol 1,3-bis[di(2,4-dimethoxy-phenyl)-phosphino]propane, and 2 mmol 1,4-benzoquinone, and

e) the reaction time was 2 instead of 3 hours.

16.2 g of a copolymer with an LVN of 1.4 dl/g was

obtained. Thus, the polymerization rate was 4.1 kg copolymer/g palladium/hour.

Example 10

A carbon monoxide/ethene/propene terpolymer was prepared as follows. A mechanically stirred autoclave of a capacity of 300 ml was charged with 180 ml methanol. Any air present in the autoclave was dispelled therefrom by pressurizing the autoclave with carbon monoxide until a pressure of 50 bar was reached, followed by releasing of the pressure, which procedure was repeated twice over. Then 30 ml of liquified propene was fed into the autoclave. After the contents of the autoclave had been brought to 55 °C, a 1:1 carbon monoxide/ethene mixture was introduced with pressure until a pressure of 56 bar was reached. Subsequently, a catalyst solution was introduced into the autoclave, comprising
6 ml of methanol,
0.01 mmol of palladium acetate,
0.2 mmol of trifluoroacetic acid, and
0.012 mmol of 1,3-bis(diphenyl-phosphino)propane.
The pressure was maintained at 56 bar by introduction of a 1:1 carbon monoxide/ethene mixture. After 10 hours the polymerization was terminated by cooling the reaction mixture down to room temperature and releasing the pressure. The terpolymer was filtered off, washed with methanol and dried at 70 °C.
12.6 g of a terpolymer with a melting point of 221 °C and an LVN of 1.0 dl/g was obtained. Thus, the polymerization rate was 1.2 kg terpolymer/g palladium/hour.

Example 11

A carbon monoxide/ethene/propene terpolymer was prepared in substantially the same way as the terpolymer of Example 10, the difference being that in this case the reaction temperature was 40 °C instead of 55 °C.
2 g of a terpolymer with a melting point of 218 °C and an LVN of 2,4 dl/g was obtained. Thus, the polymerization rate was 0.2 kg terpolymer/g palladium/hour.

Example 12

A carbon monoxide/ethene/propene terpolymer was prepared substantially in the same way as the terpolymer of Example 10, the differences being:

a) the reaction temperature was 70 °C instead of 55 °C,

b) the catalyst solution contained 1,3-bis[di(4-methoxy-phenyl)-phosphino]propane instead of 1,3-bis(diphenyl-phosphino)-propane, and

c) the reaction time was 8 hours instead of 10 hours.

14.4 g of a terpolymer having a melting point of 226 °C and an LVN of 1.0 dl/g was obtained. Thus, the polymerization rate was 1.8 kg terpolymer/g palladium/hour.

Example 13

A carbon monoxide/ethene/propene terpolymer was prepared substantially in the same way as the terpolymer of Example 10, the differences being:

a) the reaction temperature was 85 °C instead of 55 °C,

b) the catalyst solution contained 1,3-bis[di(2-methoxy-phenyl)-phosphino]propane instead of 1,3-bis(diphenyl-phosphino)-propane, and

c) the reaction time was 4 hours instead of 10 hours.

22 g of a terpolymer having a melting point of 220 °C and an LVN of 1.0 dl/g was obtained. Thus, the polymerization rate was 5.5 kg terpolymer/g palladium/hour.

Example 14

A carbon monoxide/ethene/propene terpolymer was prepared substantially in the same way as the terpolymer of Example 10, the differences being:

a) the reaction temperature was 75 °C instead of 55 °C,

b) the catalyst solution contained 1,3-bis[di(2-methoxy-phenyl)-phosphino]propane instead of 1,3-bis(diphenyl-phosphino)-propane,

c) in addition, the catalyst solution contained 2 mmol of 1,4-benzoquinone, and

d) the reaction time was 4 hours instead of 10 hours.

15.2 g of a terpolymer having a melting point of 223 °C and an LVN of 2.4 dl/g was obtained. Thus, the polymerization rate was 3.8 kg terpolymer/g palladium/hour.

Example 15

A carbon monoxide/ethene/propene terpolymer was prepared substantially in the same way as the terpolymer of Example 10, the differences being:

a) the reaction temperature was 85 °C instead of 55 °C,

b) the catalyst solution contained 1,3-bis[di(2-methoxy-phenyl)-phosphino]propane instead of 1,3-bis(diphenyl-phosphino)-propane,

c) in addition, the catalyst solution contained 2 mmol of 1,4-benzoquinone, and

d) the reaction time was 2 hours instead of 10 hours.

23.6 g of a terpolymer having a melting point of 220 °C and an LVN of 1.1 dl/g was obtained. Thus, the polymerization rate was 11.8 kg terpolymer/g palladium/hour.

Example 16

A carbon monoxide/ethene/propene terpolymer was prepared substantially in the same way as the terpolymer of Example 10, the differences being:

a) the reaction temperature was 75 °C instead of 55 °C,

b) the catalyst solution contained 1,3-bis[di(2-methoxy-phenyl)-phosphino]propane instead of 1,3-bis(diphenyl-phosphino)-propane and also 0.02 mmol of copper para-tosylate instead of 0.2 mmol of trifluoroacetic acid,

c) in addition, the catalyst solution contained 2 mmol of 1,4-benzoquinone, and

d) the reaction time was 2 hours instead of 10 hours.

22.6 g of a terpolymer having a melting point of 217 °C and an LVN of 0.8 dl/g was obtained. Thus, the polymerization rate was 11.3 kg terpolymer/g palladium/hour.

Example 17

A carbon monoxide/ethene/octene-1 terpolymer was prepared substantially in the same way as the terpolymer of Example 10, the differences being:

a) 83 ml of octene-1 instead of 30 ml of propene was used,

b) the reaction temperature was 76 °C instead of 55 °C,

c) the reaction pressure was 54 bar instead of 56 bar,

d) the catalyst solution contained 1,3-bis[di(2-methoxy-phenyl)-phosphino]propane instead of 1,3-bis(diphenyl-phosphino)-propane,

e) in addition, the catalyst solution contained 2 mmol of 1,4-benzoquinone, and

f) the reaction time was 2 hours instead of 10 hours.

13.8 g of a terpolymer having a melting point of 230 °C and an LVN of 1.1 dl/g was obtained. Thus, the polymerization rate was 6.9 kg terpolymer/g palladium/hour.

Example 18

A carbon monoxide/ethene/dodecene-1 terpolymer was prepared substantially in the same way as the terpolymer of Example 10, the differences being:

a) 83 ml of dodecene-1 instead of 30 ml of propene was used,

b) the reaction temperature was 70 °C instead of 55 °C,

c) the reaction pressure was 54 bar instead of 56 bar,

d) the catalyst solution contained 1,3-bis[di(2-methoxy-phenyl)-phosphino]propane instead of 1,3-bis(diphenyl-phosphino)-propane,

e) in addition, the catalyst solution contained 2 mmol of 1,4-benzoquinone, and

f) the reaction time was 4 hours instead of 10 hours.

10.4 g of a terpolymer having a melting point of 240 °C and an LVN of 2.1 dl/g was obtained. Thus, the polymerization rate was 2.6 kg terpolymer/g palladium/hour.

Example 19

A carbon monoxide/ethene/octene-1 terpolymer was prepared substantially in the same way as the terpolymer of Example 10, the differences being:

a) 83 ml of octene-1 instead of 30 ml of propene was used,

b) the autoclave contained 150 ml instead of 180 ml of methanol,

c) the reaction temperature was 75 °C instead of 55 °C,

d) the reaction pressure was 50 bar instead of 56 bar,

e) a catalyst solution was employed which comprised

0.02 mmol of palladium acetate,

0.4 mmol of trifluoroacetic acid,

0.024 mmol of 1,3-bis[di(2,4-dimethoxy-phenyl)phosphino]-propane, and

2 mmol of 1,4-benzoquinone, and

f) the reaction time was 2.5 hours instead of 10 hours.

20 g of a terpolymer having a melting point of 240 °C and an LVN of 2.2 dl/g was obtained. Thus, the polymerization rate was 4 kg terpolymer/g palladium/hour.

Of the polymers prepared according to Examples 1-19, the copolymers prepared according to Examples 5-9 and the terpolymers prepared according to Examples 13-19 are polymers according to the invention. In the preparation of these polymers use was made of catalyst compositions according to the invention which contained a bisphosphine in which a polar substituent was present in a position ortho to phosphorus. The catalyst compositions according to the invention which were used in Examples 8, 9 and 14-19 in addition contained a quinone as a fourth component. The copolymers prepared according to Examples 1-4 and the terpolymers prepared according to Examples 10-12, in the preparation of which use was made of catalyst compositions containing bisphosphines holding no polar substituent in a position ortho to phosphorus, fall outside the scope of the invention. They have been included in the patent application for comparison.

With the aid of $^{13}C$-NMR analysis it was established that the carbon monoxide/ethene copolymers prepared according to Examples 1-9 had a linear structure and therefore consisted of units of the formula $-CO-(C_2H_4)-$. All the copolymers prepared

according to Examples 1-9 had a melting point of 257 °C.

With the aid of $^{13}C$-NMR analysis it was also established that the carbon monoxide/ethene/propene terpolymers prepared according to Examples 10-16, the carbon monoxide/ethene/octene-1 terpolymers prepared according to Examples 17-19 and the carbon monoxide/ethene/dodecene-1 terpolymer prepared according to Example 18, had linear structures and consisted of units of the formula $-CO-(C_2H_4)-$ and, in addition, units of the formulae $-CO-(C_3H6)-$, $-CO-(C_8H_{16})-$ and $-CO-(C_{12}H_{24})-$, respectively, which units occurred randomly distributed within the terpolymers.

Comparison of Example 1 with Example 2 - both carried out using a catalyst composition containing a bisphosphine in which no polar substituent was available -, of Example 3 with Example 4 - both carried out using a catalyst composition containing a bisphosphine in which a polar group was present in a position para to the phosphorus -, and of Example 5 with Example 6 - both carried out using a catalyst composition according to the invention containing a bisphosphine in which a polar group was present in a position ortho to phosphorus - demonstrates the influence of the reaction temperature both on the reaction rate and on the molecular weights of the copolymers prepared. The effect which in the terpolymer preparation the reaction temperature exerts on reaction rate and molecular weight becomes apparent upon comparison of Example 10 with Example 11 - both carried out using a catalyst composition containing a bisphosphine in which no polar substituent was present.

The favourable effect of the replacement in the catalyst compositions of a bisphosphine which contains no polar substituent by a bisphosphine which does contain a polar substituent in a position para to phosphorus becomes clear upon comparison of Example 1 with Example 3, and of Example 10 with Example 12. Two pair of polymers are formed which have approximately equal molecular weights; however, the use of the para-substituted bisphosphine results in a higher reaction rate.

The superiority of the catalyst compositions according to the invention which contain a bisphosphine having a polar substituent in a position ortho to phosphorus over those containing a bisphosphine in which no polar substituent is present or containing a bisphosphine in which a polar substituent is present in a position para to phosphorus becomes evident upon comparison of Example 7 with Examples 1 and 3, and of Example 13 with Examples 10 and 12. Three batches of three polymers of approximately equal molecular weights are formed; however, the use of the ortho-substituted bisphosphine results in a considerably higher reaction rate.

The superior performance of the catalyst compositions according to the invention is also shown by the comparison of Example 1 - carried out using a catalyst composition containing a bisphosphine in which no polar substituent is present - with Example 6 - carried out using a catalyst composition according to the invention. The reaction rates at which the polymers are prepared are the same for both Examples, but when the ortho-substituted bisphosphine according to the invention is used, the polymers obtained have much higher molecular weights.

The favourable effect which the incorporation in the catalyst composition according to the invention of a quinone as the fourth component has on the reaction rate is demonstrated by the comparison of Example 7 with Example 8 and of Example 13 with Example 15. Two pair of polymers having approximately equal molecular weights are prepared by using the catalyst compositions of the invention; however, the use of a quinone as the fourth component in the catalyst composition results in a considerably higher reaction rate.

The superior performance of the catalyst compositions according to the invention is also demonstrated by the comparison of the morphologies of the polymers prepared according to Examples 5-9 and 13-19 - carried out using a catalyst composition according to the invention - with those of the polymers prepared according to Examples 1, 2, 10 and 11 - carried out using a catalyst composition containing a bisphosphine in which no polar substituent was present - and with those of the polymers obtained according to Examples 3, 4 and 12 - carried out using a catalyst composition containing a bisphosphine in which a polar substituent was present in a position para to phosphorus. Unlike Examples 5-9 and 13-19 - carried out using a catalyst composition according to the invention - in which the polymers were obtained in the form of globular particles of diameters of from 0.2 to 3 mm, Examples 1-4 and 10-12 - carried out using a catalyst composition not according to the invention - produced polymers in the form of fluffy particles having sizes of from 50 to 100 micron. The influence of the morphology of the polymer particles on their sedimentation rate was determined by suspending 1 g of each of the polymers prepared according to Examples 1-19 with stirring in 20 ml methanol and determining the sedimentation rate of each suspension. The sedimentation rates of the polymers prepared according to Examples 5-9 and 13-19 - using a catalyst composition according to the invention - were 5-30 sec. The sedimentation rates of the polymers prepared according to Examples 1-4 and 10-12 - using a catalyst composition not according to the invention - were 10-30 min.

## Claims

1. Catalyst compositions, characterized in that

they are based upon

a) a palladium compound,

b) an anion of an acid with a pKa of less than 2, with the proviso that the acid is not a hydrohalogenic acid,

c) a bisphosphine of the general formula $R_1R_2P$-R-$PR_3R_4$, wherein $R_1$-$R_4$ are similar or dissimilar hydrocarbyl groups with the proviso that at least one of the groups $R_1$-$R_4$ represents a polarly substituted aryl group containing at least one polar substituent in a position ortho to phosphorus, and wherein R represents a bivalent organic bridging group containing at least two carbon atoms in the bridge, and

d) optionally, a quinone.

2. Catalyst compositions as claimed in claim 1, characterized in that they are based upon a palladium salt of a carboxylic acid, such as palladium acetate, as the component a) and an anion of a sulphonic acid, such as para-toluene-sulphonic acid, or of a carboxylic acid, such as trifluoroacetic acid, as the component b), and that component b) is present in the catalyst compositions in a quantity of from 1.0 to 100 equivalents per gram atom of palladium.

3. Catalyst compositions as claimed in claim 1 or 2, characterized in that component b) is incorporated in the catalyst compositions in the form of an acid or in the form of a non-noble transition metal salt, such as a copper salt.

4. Catalyst compositions as claimed in one or more of claims 1-3, characterized in that as the component c) they contain a bisphosphine in which the bivalent bridging group R contains three carbon atoms in the bridge.

5. Catalyst compositions as claimed in one or more of claims 1-4, characterized in that as the component c) they contain a bisphosphine in which the groups $R_1$, $R_2$, $R_3$ and $R_4$ are aryl groups with the proviso that at least one of these groups contains at least one polar substitutent in a position ortho to phosphorus.

6. Catalyst compositions as claimed in claim 5, characterized in that as the components c) they contain a bisphosphine in which the aryl groups are phenyl groups.

7. Catalyst compositions as claimed in one or more of claims 1-6, characterized in that as the component c) they contain a bisphosphine in which the polar substituent in a position ortho to phosphorus is a $R_5$-O-, $R_5$-S-, $R_5$-CO-O-, $R_5R_6$N- or $R_5$-CO-$NR_5$- group, wherein $R_5$ and $R_6$ represent similar or dissimilar hydrocarbyl groups.

8. Catalyst compositions as claimed in claim 7, characterized in that as the component c) they contain a bisphosphine in which the polar substituent in a position ortho to phosphorus is an alkoxy group.

9. Catalyst compositions as claimed in claim 8, characterized in that as the component c) they contain a bisphosphine in which the polar substituent in a position ortho to phosphorus is a methoxy group.

10. Catalyst compositions as claimed in one or more of claims 1-9, characterized in that as the component c) they contain a bisphosphine in which each of the groups $R_1$, $R_2$, $R_3$ and $R_4$ is an aryl group containing a polar substituent in a position ortho to phosphorus.

11. Catalyst compositions as claimed in one or more of claims 1-10, characterized in that as the component c) they contain a bisphosphine in which the groups $R_1$, $R_2$, $R_3$ and $R_4$ are similar to one another.

12. Catalyst compositions as claimed in claim 11, characterized in that as the component d) they contain a bisphosphine chosen from the group formed by
1,3-bis[di(2-methoxy-phenyl)phosphino]propane,
1,3-bis[di(2,4-dimethoxy-phenyl)phosphino]propane,
1,3-bis[di(2,6-dimethoxy-phenyl)phosphino]propane and
1,3-bis[di(2,4,6-trimethoxy-phenyl)phosphino]propane.

13. Catalyst compositions as claimed in one or more of claims 1-12, characterized in that component c) is present therein in a quantity of 0.75-1.5 mol per mol of palladium compound.

14. Catalyst compositions as claimed in one or more of claims 1-13, characterized in that component d) is present therein in a quantity of 10-5000 mol per gram atom of palladium.

15. Catalyst compositions as claimed in claim 14, characterized in that as the component d) they contain 1,4-benzoquinone.

16. Bisphosphines, having the general formula $R_1R_2P$-R-$PR_3R_4$, wherein $R_1$-$R_4$ are similar or dissimilar hydrocarbyl groups with the proviso that at least one of $R_1$-$R_4$ represents a polarly substituted aryl group which includes at least one polar substituent in a ortho-position to phosphorus and wherein R represents a bivalent organic bridging group containing three carbon atoms in the bridge.

17. Bisphosphines having the general formula $(R_1)_2$P-R-P$(R_1)_2$ in which $R_1$ is aryl carrying a polar substituent in ortho-position to phosphorus.

18. Bisphosphines as claimed in claim 16 or 17, characterized in that R is a group $-CH_2-CH_2-CH_2-$.

19. Bisphosphines as claimed in claim 16, 17 or 18, characterized in that as polar substituents in an aryl group in a position ortho to phosphorus, $R_1$ contains one or two alkoxy groups.

20. Bisphosphine; 1,3-bis[di(2-ethoxy-phenyl)phosphino]propane.

21. Bisphosphine: 1,3-bis[di(2-methoxy-phenyl)phosphino]propane.

22. Bisphosphine: 1,3-bis[di(2,6-dimethoxy-phenyl)-phosphino]propane.

23. Bisphosphine: 1,3-bis[di(2,4-dimethoxy-phenyl)-phosphino]propane.

24. Bisphosphine: 1,3-bis[di(2,4,6-trimethoxy-phenyl)phosphino]propane.

25. Process for the preparation of polymers, characterized in that a mixture of carbon monoxide and one or more olefinically unsaturated organic compounds is polymerized by using a catalyst composition as claimed in any one of claims 1-15.

26. Process as claimed in claim 25, characterized in that the olefinically unsaturated organic compounds used are hydrocarbons, in particular ethene, or a mixture of ethene and another olefinically unsaturated hydrocarbon, in particular propene.

27. Process as claimed in claim 25 or 26, characterized in that it is carried out at a temperature of 30-150 °C, a pressure of 20-200 bar and a molar ratio in the mixture to be polymerized of olefinically unsaturated organic compounds relative to carbon monoxide of 5:1-1:2, and that per mol of olefinically unsaturated organic compound to be polymerized, such a quantity of catalyst composition is used as to contain $10^{-6}$-$10^{-4}$ gram atom of palladium.

**Patentansprüche**

1. Katalysatorzusammensetzungen, dadurch gekennzeichnet, daß sie auf

a) einer Pallladiumverbindung,

b) einem Anion einer Säure mit einem pKa-Wert von kleiner als 2, mit der Maßgabe, daß die Säure nicht eine Halogenwasserstoffsäure ist,

c) einem Bisphosphin der allgemeinen Formel $R_1R_2P$-R-$PR_3R_4$, worin $R_1$-$R_4$ gleichartige oder unterschiedliche Kohlerwasserstoffgruppen darstellen, mit der Maßgabe, daß mindestens eine der Gruppen $R_1$-$R_4$ eine polar substituierte Arylgruppe darstellt, welche mindestens einen polaren Substituenten in einer ortho-Stellung zum Phosphor enthält, und worin R eine zweiwertige organische Brückengruppe bedeutet, die wenigstens zwei Kohlenstoffatome in der Brücke enthält, und

d) wahlweise einem Chinon basieren.

2. Katalysatorzusammensetzungen nach Anspruch 1, dadurch gekennzeichnet, daß sie auf einem Palladiumsalz einer Carbonsäure, wie Palladiumacetat, als der Komponente a) und einem Anion einer Sulfonsäure, wie para-Toluosulfonsäure, oder einer Carbonsäure, wie Trifluoressigsäure, als der Komponente b) basieren, und daß die Komponente b) in den Katalysatorzusammesetzungen in einer Menge von 1,0 bis 100 Äquivalenten je Grammatom Palladium vorliegt.

3. Katalysatorzusammensetzungen nach Anspruch 1 oder 2, dadurch gekennzeichnet, daß die Komponente b) in die Karalysatorzusammensetzugen in der Form einer Säure oder in der Form eines Salzes eines unedlen Übergangsmettales, wie eines Kupfersalzes, einverleibt wird.

4. Katalysatorzusammensetzungen nach einem oder mehreren der Ansprüche 1 bis 3, dadurch gekennzeichnet, daß sie als Komponete c) ein Bisphosphin enthalten, worin die zweiwertige Brückengruppe R drei Kohlenstoffatome in der Brücke besitzt.

5. Katalysatorzusammensetzugen nach einem oder mehreren der Ansprüche 1 bis 4, dadurch gekennzeichnet, daß sie als Komponente c) ein Bisphosphin enthalten, worin die Gruppen $R_1$, $R_2$, $R_3$ und $R_4$ Arylgruppen sind, mit der Maßgabe, daß mindestens eine dieser Gruppen mindestens einen polaren Substituenten in einer ortho-Stellung zum Phosphor aufweist.

6. Katalysatorzusammensetzungen nach Anspruch 5, dadurch gekennzeichnet, daß sie als die Komponente c) ein Bisphosphin enthalten, worin die Arylgruppen Phenylgruppen sind.

7. Katalysatorzusammensetzungen nach einem oder mehreren der Ansprüche 1 bis 6, dadurch gekennzeichnet, daß sie als die Komponente c) ein Bisphosphin enthalten, worin der polare Substituent in ortho-Stellung zum Phosphor eine $R_5$-O-, $R_5$-CO-O-, $R_5R_6$N- oder $R_5$-CO-$NR_6$-Gruppe ist, worin $R_5$ und $R_6$ gleichartige oder unterschiedliche Kohlenwasserstoffgruppen darstellen.

8. Katalysatorzusammensetzungen nach Anspruch 7, dadurch gekennzeichnet, daß sie als Komponente c) ein Bisphosphin enthalten, worin der polare Substituent in einer ortho-Stellung zum Phosphor eine Alkoxygruppe ist.

9. Katalysatorzusammensetzungen nach Anspruch 8, dadurch gekennzeichnet, daß sie als Komponente c) ein Bisphosphin enthalten, worin der polare Substituent in einer ortho-Stellung zum Phosphor eine Methoxygruppe ist.

10. Katalysatorzusammensetzungen nach einem oder mehreren der Ansprüche 1 bis 9, dadurch gekennzeichnet, daß sie als die Komponente c) ein Bisphosphin enthalten, in welchem jede der Gruppen $R_1$, $R_2$, $R_3$ und $R_4$ eine Arylgruppe mit einem polaren Substituenten in einer ortho-Stellung zum Phosphor ist.

11.Katalysatorzusammensetzungen nach einem oder mehreren der Ansprüche 1 bis 10, dadurch gekennzeichnet, daß sie als die Komponente c) ein Bisphosphin enthalten, worin die Gruppen $R_1$, $R_2$, $R_3$ und $R_4$ einander ähnlich sind.

12. Katalysatorzusammensetzungen nach Anspruch 11, dadurch gekennzeichnet, daß sie als die Komponente c) ein Bisphosphin enthalten, welches von der durch

-1,3-Bis[di(2-methoxy-phenyl)phosphino]propan,
-1,3-Bis[di(2,4-dimethoxy-phenyl)phosphino]propan,
-1,3-Bis[di(2,6-dimethoxy-phenyl)phosphin]propan und
-1,3-Bis[di(2,4,6-trimethoxy-phenyl)phosphino]propan

gebildeten Gruppe ausgewählt ist.

13. Katalysatorzusammentsetzungen nach einem oder mehreren der Ansprüche 1 bis 12, dadurch gekennzeichnet, daß die Komponente c) darin in einer Menge von 0,75 bis 1,5 Mol je Mol Palladiumverbindung vorliegt.

14. Katalysatorzusammensetzungen nach einem oder mehreren der Ansprüche 1 bis 13, dadurch gekennzeichnet, daß die Komponente d) darin in einer Menge von von 10 bis 5.000 Mol je Gramm-Atom Palladium vorliegt.

15. Katalysatorzusammensetzungen nach Anspruch 14, dadurch gekennzeichnet, daß sie als Komponente d) 1,4-Benzochinon enthalten.

16. Bisphosphine mit der allgemeinen Formel $R_1R_2P$-R-$PR_3R_4$, worin $R_1$ bis $R_4$ gleichartige oder unterschiedliche Kohlenwasserstoffgruppen bedeuten, mit der Maßgabe, daß wenigstens eine Gruppe von $R_1$ bis $R_4$ eine polar substituierte Arylgruppe darstellt, welche mindestens einen polaren Substituenten in einer ortho-Stellung zum Phosphor enthält, und worin R eine zweiwertige organische Brückengruppe mit 3 Kohlenstoffatomen in der Brücke darstellt.

17. Bisphosphin mit der allgemeinen Formel $(R_1)_2P$-R-$P(R_1)_2$, worin $R_1$ für Aryl steht, welches einen polaren Substituenten in einer ortho-Stellung zum Phosphor trägt.

18. Bisphosphine nach Anspruch 16 oder 17, dadurch gekennzeichnet, daß R eine Gruppe $-CH_2-CH_2-CH_2$ ist.

19. Bisphosphine nach Anspruch 16, 17 oder 18, dadurch gekennzeichnet, daß $R_1$ als polare Substituenten in einer Arylgruppe in einer ortho-Stellung zum Phosphor eine oder zwei Alkoxygruppen enthält.

20. Das Bisphosphin 1,3-Bis[di-2-ethoxy-phenyl)phosphino]propan.

21. Das Bisphosphin 1,3-Bis[di(2-methoxy-phenyl)phosphino]propan.

22. Das Bisphosphin 1,3-Bis[di(2,6-dimethoxy-phenyl)phosphino]propan.

23. Das Bisphosphin 1,3-Bis[di(2,4-dimethoxy-phenyl)phosphino]propan.

24. Das Bisphosphin 1,3-Bis[di(2,4,6-trimethoxy-phenyl)phosphino]propan.

25. Verfahren zu Herstellung von Polymeren, dadurch gekennzeichnet, daß ein Gemisch aus Kohlenmonoxid und einer oder mehreren olefinisch ungesättigten organischen Verbindungen unter Anwendung einer Katalysatorzusammensetzung nach einem der Ansprüche 1 bis 15 polymerisiert wird.

26. Verfahren nach Anspruch 25, dadurch gekennzeichnet, daß die verwendeten olefinisch ungesättigten organischen Verbindungen Kohlenwasserstoffe, insbesondere Ethen, oder ein Gemisch aus Ethen und einem anderen olefinisch ungesättigten Kohlenwasserstoff, insbesondere Propen, ist.

27. Verfahren nach Anspruch 25 oder 26, dadurch gekennzeichnet, daß es bei einer Temperatur von 30 bis 150°C, einem Druck von 20 bis 200 bar und einem Molverhältnis im zu polymerisierenden Gemisch von olefinisch ungesättigten organischen Verbindungen zu Kohlenmonoxid von 5:1 bis 1:2 ausgeführt wird und daß je Mol an zu polymerisierender, olefinisch ungesättigter organischer Verbindung solch eine Menge an Katalysatorzusammensetzung verwendet wird, daß $10^{-6}$ bis $10^{-4}$ Gramm-Atom Palladium darin enthalten sind.

## Revendications

1. Compositions de catalyseurs caractérisées en ce qu'elles sont à base de :

(a) un composé de palladium,

(b) un anion d'un acide ayant une valeur pKa de moins de 2, à la condition que l'acide ne soit pas un acide halogènhydrique,

(c) une bisphosphine de formule générale $R_1R_2P$-R-$PR_3R_4$, dans laquelle $R_1$ à $R_4$ sont des groupes hydrocarbyle similaires ou différents, à la condition qu'au moins l'un des groupes $R_1$ à $R_4$ représente un radical aryle à substitution polaire contenant au moins un substituant polaire en position ortho par rapport au phosphore et dans laquelle R représente un groupe de pontage organique bivalent contenant au moins deux atomes de carbone dans le pontage, et

(d) facultativement une quinone.

2. Compositions de catalyseurs selon la revendication 1, caractérisées en ce qu'elles sont à base d'un sel de palladium d'un acide carboxylique tel que l'acétate de palladium, à titre de composant (a) et d'un anion d'un acide sulfonique tel que l'acide p-toluènesulfonique ou d'un acide carboxylique tel que l'acide trifluoracétique, à titre de composant (b) et en ce que le composant (b) est présent dans la composition de catalyseur en une quantité de 1,0 à 100 eq,par atomegramme de palladium.

3. Compositions de catalyseurs selon la revendication 1 ou 2, caractérisées en ce que le composant (b) est incorporé dans la composition sous forme d'un acide ou sous forme d'un sel d'un métal de transition non noble tel qu'un sel de cuivre.

4. Compositions de catalyseurs selon l'une quelconque des revendications 1 à 3, caractérisée en ce qu'à titre de composant (c), elles contiennent un bisphopine dans lequel le groupe divalent de pontage R contient trois atomes de carbone dans le pontage.

5. Compositions de catalyseurs selon l'une ou plusieurs des revendications 1 à 4, caractérisées en ce qu'à titre de composant (c), elles contiennent une bisphosphine dont les groupes $R_1$, $R_2$, $R_3$ et $R_4$ sont des groupes aryle, à la condition qu'au moins l'un de ces groupes contienne au moins un substituant polaire en position ortho par rapport au phosphore.

6. Compositions de catalyseurs selon la revendication 5, caractérisées en ce qu'à titre de composant

(c), elles contiennent une bisphosphine dont les groupes aryle sont des groupes phényle.

7. Compositions de catalyseurs selon l'une ou plusieurs des revendications 1 à 6, caractérisées en ce qu'à titre de composant (c), elles contiennent une bisphosphine dont le substituant polaire en position ortho par rapport au phosphore est un groupe $R_5$-O-, $R_5$-S-, $R_5$-CO-O-, $R_5R_5$N-ou $R_5$-CO-N$R_5$, dans lequel $R_5$ et $R_6$ représentent des radicaux hydrocarbyle similaires ou disimilaires.

8. Compositions de catalyseurs selon la revendication 7, caractérisées en ce qu'à titre de composant (c), elles contiennent une bisphosphine dans laquelle le substituant polaire en position ortho par rapport au phosphore est un groupe alcoxy.

9. Compositions de catalyseurs selon la revendications 8, caractérisées en ce qu'à titre de composant (c), elles contiennent une bisphosphine dont le substituant polaire en position ortho par rapport au phosphore est un groupe méthoxy.

10. Compositions de catalyseurs selon l'une ou plusieurs des revendications 1 à 9, caractérisées en ce qu'à titre de composant (c), elles contiennent une bisphosphine dont chacun des groupes $R_1$, $R_2$, $R_3$ et $R_4$ est un radical aryle contenant un substituant polaire en position ortho par rapport au phosphore.

11. Compositions de catalyseurs selon l'une ou plusieurs des revendications 1 à 10, caractérisées en ce qu'à titre de composant (c), elles contiennent une bisphosphine, dans laquelle les groupes $R_1$, $R_2$, $R_3$ et $R_4$ sont similaires.

12. Compositions de catalyseurs selon la revendication 11, caractérisées en ce qu'à titre de composant c), elles contiennent une bisphosphine choisie parmi les:
1,3-bis-(di-(2-méthoxyphényl)-phosphino]-propane,
1,3-bis-[di-(2,4-diméthoxyphényl)-phosphino]-propane,
1,3-bis-[di-(2,6-diméthoxyphényl)-phosphino]-propane, et
1,3-bis-[di-(2,4,6-triméthoxyphényl)-phosphino] -propane.

13. Compositions de catalyseurs selon une ou plusieurs des revendications 1 à 12, caractérisées en ce que le composant c est présent en une quantité de 0,75 à 1,5 mole par mole de composé de palladium.

14. Compositions de catalyseurs selon l'une ou plusieurs des revendications 1 à 13, caractérisées en ce que le composant d) est présent en une quantité de 10 à 5000 moles par atome-gramme de palladium.

15. Compositions de catalyseurs selon la revendication 14, caractérisées en ce qu'à titre de composant (d), elles contiennent une 1,4-benzoquinone.

16. Bisphosphines répondant à la formule générale: $R_1R_2P-R-PR_3R_4$
dans laquelle $R_1$ à $R_4$ sont des groupes hydrocarbyle similaires ou différents, à la condition qu'au moins l'un des $R_1$ à $R_4$ soit un radical aryle à substitution polaire contenant au moins un substituant polaire en position ortho par rapport au phosphore et R représente un groupe organique bivalent de pontage contenant trois atomes de carbone dans le pontage.

17. Bisphosphines de formule générale :

$$(R_1)_2P-R-P(R_1)_2$$

dans laquelle $R_1$ est un radical aryle portant un substituant polaire en position ortho par rapport au phosphore.

18. Bisphosphines selon la revendication 16 ou 17, caractérisées en ce que R est un groupe $-CH_2-CH_2-CH_2-$.

19. Bisphosphines selon la revendication 16, 17 ou 18, caractérisées en ce qu'à titre de substituant polaire, on prévoit un radical aryle en position ortho par rapport au phosphore et $R_1$ contient un ou deux radicaux alcoxy.

20. Bisphosphine : 1,3-bis-[di-(2-éthoxyphényl)-phosphino] -propane.

21. Bisphosphine : 1,3-bis-[di-(2-méthoxyphényl)-phosphino] -propane.

22. Bisphosphine : 1,3-bis[-di-(2,6-diméthoxyphényl)-phosphino] -propane.

23. Bisphosphine : 1,3-bis-[di-(2,4-diméthoxyphényl)-phosphino]-propane.

24. Bisphosphine : 1,3-bis-[di-(2,4,6-triméthoxyphényl)-phosphino]-propane.

25. Procédé de préparation de polymères, caractérisé en ce qu'on polymérise un mélange d'oxyde de carbone et un ou plusieurs composés organiques à insaturation oléfinique en utilisant une composition de catalyseurs selon l'une quelconque des revendications 1 à 15.

26. Procédé selon la revendication 25, caractérisé en ce que les composés organiques à insaturation oléfinique sont des hydrocarbures, en particulier l'éthène ou un mélange d'éthène et d'un autre hydrocarbure à insaturation oléfinique, notamment le propène.

27. Procédé selon la revendication 25 ou 26, caractérisé en ce qu'on l'effectue à une température de 30 à 150°C, sous une pression de 20 à 200 bars et avec un rapport molaire dans le mélange à polymériser des composés organiques à insaturation oléfinique à l'oxyde de carbone compris entre 5:1 et 1:2 et en ce que par mole de composé organique à insaturation oléfinique à polymériser, on utilise une quantité de compositions catalytiques contenant de $10^{-6}$ à $10^{-4}$ atome-gramme de palladium.